# EUROPÄISCHE PATENTANMELDUNG

(11) **EP 3 995 194 A1**
(43) Veröffentlichungstag der Anmeldung: **11.05.2022**
(21) Anmeldenummer: 20206181.8
(22) Anmeldetag: 06.11.2020
(51) Int. Cl.: B01D 1/00, B01D 1/06, B01D 1/12, B01D 1/26, B01D 1/30, B01D 3/10, B01D 5/00, B01D 19/00, B01D 19/02, B01D 19/04, C02F 1/08, C02F 1/20, A01C 3/00, C02F 103/08, C02F 103/20

(54) **ENTGASUNGSKOLONNE, SYSTEM UND VERFAHREN ZUM ENTGASEN UND/ODER EINDICKEN EINES REAKTIONSMEDIUMS**

(71) Anmelder: Regasko GmbH, 86825 Bad Wörishofen (DE)
(72) Erfinder: REITER, Andreas, 86825 Bad Wörrishofen (DE)
(74) Vertreter: K&P Patentanwaltsgesellschaft mbH

(57) **Zusammenfassung**

Die Erfindung betrifft eine Entgasungskolonne zum Entgasen und/oder Eindicken eines Reaktionsmediums, wobei die Entgasungskolonne Folgendes aufweist: mindestens ein inneres Rohr, das dazu ausgebildet ist, von einem Reaktionsmedium durchströmt zu werden; mindestens ein mittleres Rohr zum Erhitzen des Reaktionsmediums, insbesondere mittels eines Heizmediums, wobei das innere Rohr zumindest bereichsweise innerhalb des mittleren Rohrs ausgebildet ist; und ein äußeres Rohr als Reaktionsraum für das Reaktionsmedium, wobei das mittlere Rohr innerhalb des äußeren Rohrs ausgebildet ist, wobei das mindestens eine innere Rohr einen Fluidüberlauf aufweist, über den das Reaktionsmedium nach Ausströmen aus dem mindestens einen inneren Rohr zum Strömen entlang einer Außenfläche des mittleren Rohres nach unten führbar ist, wobei ein erster Bereich in dem Innenbereich des mindestens einen inneren Rohrs ausgebildet ist, wobei ein zweiter Bereich zwischen dem inneren Rohr und dem mittleren Rohr ausgebildet ist, und wobei ein dritter Bereich zwischen dem äußeren Rohr und dem mittleren Rohr ausgebildet ist, und wobei der zweite Bereich dazu ausgebildet ist, das Reaktionsmedium beim Durchströmen in dem inneren Rohr und beim Entlangströmen an der Außenfläche des mittleren Rohrs zu erhitzen. Des Weiteren wird ein Verfahren zum Entgasen und/oder Eindicken eines Reaktionsmediums angegeben.

## Beschreibung

### TECHNISCHES GEBIET

Die vorliegende Erfindung betrifft eine Entgasungskolonne zum Entgasen und/oder Eindicken eines Reaktionsmediums. Ferner betrifft die Erfindung ein System und ein Verfahren zum Entgasen und/oder Eindicken eines Reaktionsmediums.

### STAND DER TECHNIK

Aus der DE 37 28 320 C2 ist ein Verfahren und eine Vorrichtung zum Entgasen und/oder Eindicken eines Reaktionsmediums bekannt. Dabei beschreibt die DE 37 28 320 C2 insbesondere ein Verfahren und eine Vorrichtung zur Aufkonzentration krustenbildender Lösungen im kontinuierlichen Betrieb sowie Zerlegung einer Lösung in Lösungsmittel und Feststoffe mit geringen Mengen anhaftender Feuchte. Hierzu wird das Reaktionsmedium zunächst in zwei in Serie geschalteten Wärmetauschern erhitzt und anschließend in einen Suspensionskreislauf eingeführt, der einen Fallstromverdampfer durchströmt und dabei teilweise verdampft. Der im Fallstromverdampfer entstehende Brüdendampf wird durch einen Verdichter verdichtet und als Heizdampf verwendet, wobei das Kondensat insbesondere zur Beheizung des eintretenden Reaktionsmittels im ersten Wärmetauscher dient.

Die aus der DE 37 28 320 C2 bekannte Anlage weist allerdings den Nachteil auf, dass die Anlage aufwändig aufgebaut ist und weder eine hohe Leistung noch eine hohe Entgasungswirkung besitzt.

Ausgehend von dem oben aufgeführten Stand der Technik ist es Aufgabe der vorliegenden Erfindung, eine verbesserte Vorrichtung anzugeben, die die oben genannten Probleme und Nachteile des Standes der Technik ausräumt. Insbesondere ist es Aufgabe der vorliegenden Erfindung, eine Entgasungskolonne zur Verfügung zu stellen, die sich durch eine kompakte und günstig herzustellende Bauform bei gleichzeitig guter Entgasungswirkung auszeichnet. Die Entgasungskolonne soll ferner als einfach aufgebautes Grundmodul eines Systems dienen. Dabei ist es ferner Aufgabe der vorliegenden Erfindung, ein System und ein Verfahren zum Entgasen und/oder Eindicken anzugeben, die ebenfalls die Nachteile des Standes der Technik ausräumen.

### OFFENBARUNG DER ERFINDUNG

Die Aufgabe wird gelöst mit einer Entgasungskolonne gemäß Anspruch 1, einem System zum Entgasen und/oder Eindicken gemäß Anspruch 10 sowie einem entsprechenden Verfahren gemäß Anspruch 11. Vorteilhafte Weiterbildungen der Erfindung sind Gegenstand der abhängigen Ansprüche.

Die erfindungsgemäße Lösung besteht insbesondere darin, eine Entgasungskolonne zum Entgasen und/oder Eindicken eines Reaktionsmediums anzugeben, wobei die Entgasungskolonne Folgendes aufweist: mindestens ein inneres Rohr, das dazu ausgebildet ist, von einem Reaktionsmedium durchströmt zu werden; mindestens ein mittleres Rohr zum Erhitzen des Reaktionsmediums, insbesondere mittels eines Heizmediums, wobei das innere Rohr zumindest bereichsweise innerhalb des mittleren Rohrs ausgebildet ist; und ein äußeres Rohr als Reaktionsraum für das Reaktionsmedium, wobei das mittlere Rohr innerhalb des äußeren Rohrs ausgebildet ist, wobei das mindestens eine innere Rohr einen Fluidüberlauf aufweist, über den das Reaktionsmedium nach Ausströmen aus dem mindestens einen inneren Rohr zum Strömen entlang einer Außenfläche des mittleren Rohres nach unten führbar ist, wobei ein erster Bereich in dem Innenbereich des mindestens einen inneren Rohrs ausgebildet ist, wobei ein zweiter Bereich zwischen dem inneren Rohr und dem mittleren Rohr ausgebildet ist, und wobei ein dritter Bereich zwischen dem äußeren Rohr und dem mittleren Rohr ausgebildet ist, und wobei der zweite Bereich dazu ausgebildet ist, das Reaktionsmedium beim Durchströmen in dem inneren Rohr und beim Entlangströmen an der Außenfläche des mittleren Rohrs zu erhitzen.

Eine Entgasungskolonne bezeichnet eine verfahrenstechnische Einrichtung, die unter Nutzung physikalischer Eigenschaften und Gleichgewichtszustände zwischen unterschiedlichen Phasen ein Reaktionsmedium trennt bzw. entgast und/oder eindickt. Auch wenn derartige Kolonnen üblicherweise in Form von schlanken Säulen vorliegen, soll der Begriff keine Einschränkung hinsichtlich der Form der Vorrichtung darstellen.

Die Entgasung bezeichnet die gesteuerte Entfernung von Gasen und anderer flüchtiger Substanzen wie Lösemittel oder Feuchtigkeit aus Flüssigkeiten.

Das Reaktionsmedium kann ein beliebiger Stoff sein, der entgast, eingedickt und/oder verdampft werden sollen. Beispielsweise kann es sich bei dem Reaktionsmedium um Gülle, Abwasser, Meerwasser oder Alkohol handeln.

Das Heizmedium kann flüssig und/oder gasförmig sein. Beispielsweise kann es sich um Wasser, Sole, Dampf oder Brüden aus einer anderen Anlage handeln. Als Brüden werden sämtliche Gase verstanden, die beim Destillieren von Flüssigkeitsgemischen, Verdampfen, Entgasen oder Trocknen entstehen.

Bei der Verwendung von gasförmigen Heizmedien kommt es üblicherweise zur Kondensation des Heizmediums. Das mittlere und das innere Rohr dienen dann als Kondensationsflächen für das gasförmige Heizmedium, wobei das Heizmedium Energie abgibt und es zu einer Wärmeübertragung an das Reaktionsmedium kommt.

Als Rohr wird allgemein ein Hohlkörper verstanden. Dieser Hohlkörper ist vorzugsweise länglich. Ein Rohr kann auch als Zylinder mit mehreren durchgehenden Ausnehmungen ausgebildet sein. Der Querschnitt des Rohrs ist vorzugsweise kreisförmig. Allerdings kann jedes Rohr auch einen hiervon abweichenden Querschnitt aufweisen. Beispielsweise kann der Querschnitt auch oval oder mehreckig ausgebildet sein. Der Querschnitt des Rohrs entlang der Länge muss nicht konstant sein. Es kann vielmehr vorteilhaft sein, wenn der Querschnitt von unten nach oben kleiner wird, so dass sich eine verjüngende, beispielsweise konische, Form des Rohrs ergibt. Vorzugsweise kann zumindest das mittlere Rohr derart konisch ausgebildet sein, dass das Reaktionsmedium langsamer an der Außenfläche des mittleren Rohrs entlangströmt und besser erhitzt werden kann.

Der erste Bereich wird als innerer Bereich mittels des inneren Rohrs, insbesondere dessen Innenbereich, definiert. Dieser innere Bereich dient dazu, das Reaktionsmedium von unten nach oben zum Fluidüberlauf zu befördern. Das innere Rohr ist oben offen ausgebildet, so dass das Reaktionsmedium hier überlaufen kann. Aufgrund der Schwerkraft läuft das Reaktionsmedium dann an einer Außenfläche des mittleren Rohrs nach unten.

Der zweite Bereich ist als mittlerer Bereich zwischen dem inneren Rohr und dem mittleren Rohr definiert. Der mittlere Bereich dient hierbei als Heizbereich, der dazu ausgebildet ist, das Reaktionsmedium zu erhitzen.

Der dritte Bereich ist als äußerer Bereich zwischen dem mittleren Rohr und dem äußeren Rohr definiert. Der äußere Bereich dient hierbei als Reaktionsraum für das Reaktionsmedium, in dem das Reaktionsmedium dünnflächig entgast wird und in dem Brüden entsteht und abgezogen werden kann. Das äußere Rohr kann vorzugsweise isoliert sein, um Wärmeverluste zu minimieren.

Der erste Bereich und der dritte Bereich sind fluidisch miteinander verbunden. Insbesondere sind die beiden Bereiche mittels des Fluidüberlaufs verbunden. So kann das Reaktionsmedium von dem ersten Bereich in den dritten Bereich strömen. Der zweite Bereich ist in der Entgasungskolonne hingegen fluidisch getrennt von dem ersten und dritten Bereich ausgebildet.

Das Reaktionsmedium wird in das innere Rohr eingeleitet und innerhalb des inneren Rohrs nach oben befördert. Dabei wird das Reaktionsmedium bereits mittels des innerhalb des zweiten Rohrs zirkulierenden Heizmediums erhitzt. An einem oberen Ende des inneren Rohrs, insbesondere an dem Fluidüberlauf, strömt das Reaktionsmedium aus dem inneren Rohr aus und läuft dünnflächig auf einer Außenfläche des mittleren Rohrs wieder herunter. Dieses dünnflächige Entlanglaufen wird auch als Dünnschichtentgasung bezeichnet.

Erfindungsgemäß ist die Entgasungskolonne derart aufgebaut, dass das Reaktionsmedium beim Hochpumpen in dem inneren Rohr und beim Herunterlaufen an dem mittleren Rohr geheizt wird, so dass das Reaktionsmedium optimal verdampfen kann. Der zweite Bereich hat also eine doppelte Heizfunktion und weist eine Siedefläche - die Außenseite des mittleren Rohrs - und eine Wärmeübertragungsfläche - die Innenseite des mittleren Rohrs bzw. die Außenseite des inneren Rohrs - auf. Im Vergleich zu herkömmlichen Heizeinrichtungen kann bei der erfindungsgemäßen Erhitzung ein erhöhter Wärmeübergangskoeffizient durch die gleichzeitige Verwendung von Kondensation und Verdampfung erreicht werden.

Der Vorteil der Entgasungskolonne liegt insbesondere in der kompakten Bauweise, da Heizung und Reaktor in einer Entgasungskolonne vereint sind. Die doppelte Heizfunktion des zweiten Bereichs sorgt für eine erhöhte Leistung und eine sehr gute Entgasungswirkung. Auch die Ausbildung als Dünnschichtentgasung unterstützt dies und verbessert die Entgasungswirkung der Entgasungskolonne weiter. Ferner verfügt die Entgasungskolonne über eine Selbstreinigungsfunktion, da frisch eingepumptes Reaktionsmedium mögliche Anhaftungen in dem ersten und dritten Bereich entfernen kann.

Mit der erfindungsgemäßen Entgasungskolonne wird die Aufgabe in zufriedenstellender Weise gelöst. Insbesondere zeichnet sich die Entgasungskolonne durch eine kompakte und günstig herzustellende Bauform aus, wobei gleichzeitig eine gute Entgasungswirkung erzielt werden kann.

Bei einer bevorzugten Ausgestaltung der vorliegenden Erfindung weist die Entgasungskolonne ferner Folgendes auf: einen Reaktionsmedium-Vorlauf hin zu dem ersten Bereich und einen Reaktionsmedium-Rücklauf weg von dem dritten Bereich; einen Heizmedium-Vorlauf hin zu dem zweiten Bereich und einen Heizmedium-Rücklauf weg von dem zweiten Bereich; und einen Brüdenabzug weg von dem dritten Bereich.

Beispielsweise sind der Reaktionsmedium-Vorlauf und der Reaktionsmedium-Rücklauf in einem unteren Bereich, besonders bevorzugt an einer Unterseite, der Entgasungskolonne angeordnet. Der Reaktionsmedium-Rücklauf kann ferner beispielsweise an einer Unterseite des äußeren Rohrs angeordnet sein. Vorzugsweise ist der Brüdenabzug an einem oberen Bereich, besonders bevorzugt an einer Oberseite des äußeren Rohrs, der Entgasungskolonne angeordnet. Der Heizmedium-Vorlauf ist vorzugsweise an der Oberseite und der Heizmedium-Rücklauf an der Unterseite der Entgasungskolonne, insbesondere des zweiten Bereichs angeordnet. Grundsätzlich wären hierbei allerdings auch andere Anordnungen denkbar.

Gemäß einer vorteilhaften Weiterbildung der Erfindung weist das mindestens eine innere Rohr eine Vielzahl von inneren Rohren auf, wobei zwischen dem Reaktionsmedium-Vorlauf und der Vielzahl von inneren Rohren ein Verteilerraum zum Verteilen des Reaktionsmediums in die inneren Rohre ausgebildet ist.

Durch eine Vielzahl von Rohren als inneres Rohr wird die Wärmeübertragungs-Oberfläche zum Reaktionsmedium vergrößert. Das Reaktionsmedium kann so wirkungsvoller erhitzt werden. Der Verteilerraum ist vorzugsweise mittels einer unteren und einer oberen Verteilerplatte ausgebildet, welche das Reaktionsmedium im Betrieb auf die einzelnen Rohre verteilen. Das mindestens eine innere Rohr und der Verteilerraum können auch als Vorratsbehälter für das Reaktionsmedium aufgefasst werden.

Eine besonders vorteilhafte Ausgestaltung der vorliegenden Erfindung sieht vor, dass innerhalb des äußeren Rohrs vor dem Reaktionsmedium-Rücklauf ein Reaktionsmedium-Speicher angeordnet ist.

Allgemeiner formuliert ist der Reaktionsmedium-Speicher stromaufwärts von dem Reaktionsmedium-Rücklauf innerhalb des äußeren Rohrs angeordnet. Der Reaktionsmedium-Speicher kann beispielsweise dadurch ausgebildet werden, dass die untere Verteilerplatte angehoben wird. So wird ein Raum zwischen der unteren Verteilerplatte und dem Reaktionsmedium-Rücklauf frei, der als Speicher für Reaktionsmedium verwendet werden kann. Hierdurch kann ein zusätzlicher Vorratstank, mit dem die Entgasungskolonne verbunden ist, verkleinert werden. Der zusätzliche Vorratstank kann auch ganz entfallen. Der Vorratstank ist allgemein dazu ausgebildet, das Reaktionsmedium bis zu der gewünschten Entgasung zirkulieren lassen zu können.

Gemäß einer vorteilhaften Weiterentwicklung der Erfindung sind innerhalb des ersten Bereichs, innerhalb des zweiten Bereichs und/oder innerhalb des dritten Bereichs Einrichtungen zum Vergrößern der Reaktionsfläche, zum Verlangsamen der Strömungsgeschwindigkeit und/oder zum Verwirbeln des Reaktionsmediums ausgebildet.

Bei den Einrichtungen kann es sich hierbei insbesondere um Schnecken, Lamellen, Platten, Düsen, Strömungsbremsen oder ähnliches handeln. Insbesondere können im ersten Bereich, also innerhalb des mindestens einen inneren Rohrs, Schnecken eingebaut sein, um dort eine größere Verwirbelung des nach oben transportierten Reaktionsmediums zu erreichen. Außerdem können an der Rohrinnenseite und/oder an der Rohraußenseite Lamellen angeordnet sein, um die Reaktionsfläche zu vergrößern. Ferner können auch im zweiten Bereich Platten, Düsen und dergleichen eingebaut werden, um eine größere Verwirbelung des Heizmediums zu erreichen. Ferner kann die Außenseite des mittleren Rohrs auch so verändert werden, dass das entlangströmende Reaktionsmedium abgebremst wird. Hierbei kann es sich beispielsweise um ein konisches Rohr, Rillen am Rohr, Strömungsbremsen, Schnecken oder ähnliches handeln.

Eine weitere Ausgestaltung der vorliegenden Erfindung sieht vor, dass mindestens ein Heizrohr innerhalb des ersten Bereichs oder dritten Bereichs angeordnet ist, wobei das mindestens eine Heizrohr mit einer externen Heizung verbunden ausgebildet ist.

So kann das Reaktionsmedium in dem ersten oder dritten Bereich zusätzlich erhitzt werden. Das Heizrohr kann mittels Brüdens oder einer externen Heizung erhitzt werden.

Gemäß einer vorteilhaften Weiterentwicklung der Erfindung weist die Entgasungskolonne einen Schaumzerstörer auf.

Je nach Reaktionsmedium kann es zu einer Schaumbildung bei der Entgasung kommen. Der Schaum stört hierbei den weiteren Prozess. Daher kann ein mechanischer Schaumzerstörer angeordnet werden. Der mechanische Schaumzerstörer kann beispielsweise an dem Brüdenabzug angeordnet sein. Alternativ oder zusätzlich hierzu können Entschäumer oder Schaumbekämpfungsmittel verwendet werden, die dem Reaktionsmedium beigemischt werden.

In einer weiteren vorteilhaften Ausgestaltung der Erfindung ist eine Längenkompensations-Einrichtung zwischen dem mittleren und/oder dem inneren Rohr und dem äußeren Rohr ausgebildet.

Die Längenkompensations-Einrichtung ist hierbei dazu ausgebildet, eine Längenausdehnung zwischen den Rohren zu kompensieren, so dass keine zu großen Kräfte bei Ausdehnung der Rohre der Entgasungskolonne entstehen. Die Längenkompensations-Einrichtung kann beispielsweise ein Rohr aufweisen.

Bei einer besonders bevorzugten Ausführungsform der Erfindung ist das Reaktionsmedium Gülle.

Bei der Gülle kann es sich auch um nicht separierte Gülle handeln. Die Entgasungskolonne ist dazu geeignet, bis zu 100% Ammonium zu entfernen, wobei das Ammonium gleichzeitig konzentriert werden kann. Durch den einfachen Aufbau der Entgasungskolonne und den hohen Wirkungsgrad entsteht ein Kostenvorteil gegenüber der herkömmlichen Gülle-Beseitigung. Außerdem stellt die behandelte Gülle durch die Entfernung des Stickstoffs keine Gefahr mehr für die Umwelt und das Grundwasser dar. Wichtige Bestandteile wie Phosphat und Kalidünger bleiben dennoch in der Gülle erhalten und können nach der Behandlung weiterhin verwendet werden. Außerdem kommt die erfindungsgemäße Entgasungskolonne ohne die üblicherweise verwendete Schwefelsäure aus, wobei das Produkt dennoch als mineralischer Dünger verwendet werden kann. Ferner ist es möglich, das Ammonium so weit zu konzentrieren, dass industriefähiges Ammoniakwasser entsteht.

Ferner wird die Aufgabe mittels eines Systems zum Entgasen und/oder Eindicken von Reaktionsmedium gelöst, wobei das System eine Vielzahl von Entgasungskolonnen nach einem der vorherigen Ansprüche in mehreren Stufen aufweist, wobei die Entgasungskolonnen parallel, seriell oder zirkular betreibbar sind.

Eine Stufe wird mit Brüden aus der vorherigen Stufe geheizt. Die erste Stufe kann mit einem anderen Heizmedium geheizt werden. Jede Stufe kann wiederum eine Vielzahl von Entgasungskolonnen aufweisen. Beim parallelen Betrieb zirkuliert das Reaktionsmedium im Chargenbetrieb so lange innerhalb einer Stufe, bis es den gewünschten Entgasungs-/Eindickungszustand erreicht. Hierbei sind mehrere Stufen parallel zueinander angeordnet. Beim seriellen Betrieb durchströmt das Reaktionsmedium seriell mehrere hintereinander geschaltete Stufen, bis es den gewünschten Entgasungs- /Eindickungszustand erreicht. Beim zirkularen Betrieb durchströmt das Reaktionsmedium ebenfalls seriell mehrere hintereinander geschaltete Stufen, wobei das Reaktionsmedium an der letzten Stufe nicht ausgelassen wird, sondern wieder von der letzten Stufe in die erste Stufe gepumpt wird.

Wenn mittels des Systems eine Aufkonzentration stattfinden soll, wird beispielsweise ein zusätzlicher Kondensat-Auffangbehälter an das System angeschlossen.

Bei dem System sind die bereits im Zusammenhang mit der Entgasungskolonne beschriebenen Aspekte und Vorteile gleichermaßen gültig. Entsprechend sind die bereits bezüglich der einzelnen Entgasungskolonne genannten Vorteile und Aspekte auf das System übertragbar und werden hier nicht einzeln wiederholt. Durch die baugleiche, modulare Ausführung jeder einzelnen Entgasungskolonne des Systems ist es einerseits möglich, das System einfach aufzubauen und andererseits möglich, das System einfach zu erweitern oder an einen anderen Anwendungsfall anzupassen.

Mit dem erfindungsgemäßen System wird die Aufgabe in zufriedenstellender Weise gelöst. Insbesondere ist das System aus einzelnen einfach aufgebauten Entgasungskolonnen ausgebildet, wobei das System in seinen verschiedenen Betriebszuständen einen guten Wirkungsgrad liefert und gut an spezifische Anwendungsfälle angepasst werden kann.

Weiterhin ferner wird die Aufgabe mittels eines Verfahrens zum Entgasen und/oder Eindicken eines Reaktionsmediums gelöst, wobei das Verfahren in einer Entgasungskolonne mit einem ersten Bereich, einem zweiten Bereich und einem dritten Bereich durchgeführt wird, und wobei das Verfahren folgende Schritte aufweist: Strömen von Reaktionsmedium in den ersten Bereich; Strömen von Heizmedium in den zweiten Bereich; erstes Erhitzen des Reaktionsmediums innerhalb des ersten Bereichs mittels des zweiten Bereichs, wobei das Erhitzen des Reaktionsmediums beim Durchströmen des ersten Bereichs erfolgt; wobei das Reaktionsmedium an einem Fluidüberlauf zwischen dem ersten Bereich und einer Grenzfläche zwischen dem zweiten Bereich und dem dritten Bereich überläuft und entlang der Grenzfläche herabläuft, wobei ein zweites Erhitzen des Reaktionsmediums an der Grenzfläche des zweiten Bereichs erfolgt.

Bei der Entgasungskolonne kann es sich um eine der erfindungsgemäßen Entgasungskolonnen handeln, so dass auch hier sämtliche einzelne Aspekte und Vorteile übertragbar sind.

Da ein erstes Erhitzen und ein zweites Erhitzen des Reaktionsmediums mittels des zweiten Bereichs erfolgen, wird eine besonders gute Entgasungsleistung erreicht. Die Leistung der Entgasungskolonne wird weiterhin dadurch verbessert, dass das Reaktionsmedium beim zweiten Erhitzen dünnflächig vorliegt. Die Grenzfläche kann der Außenfläche des mittleren Rohrs entsprechen.

Mit dem erfindungsgemäßen Verfahren wird die Aufgabe in zufriedenstellender Weise gelöst. Insbesondere ermöglicht das Verfahren eine gute Entgasungs- bzw. Eindickungswirkung.

Vorzugsweise kann das Verfahren einen zusätzlichen Schritt aufweisen, bei dem Entschäumer oder Schaumbekämpfungsmittel dem Reaktionsmedium beigemischt werden. Hierbei kann der Entschäumer vor dem Zuführen in den ersten Bereich zugemischt werden, oder alternativ während des Entgasungsprozesses in den dritten Bereich eingebracht, beispielsweise eingesprüht, werden.

Bei einer vorteilhaften Weiterbildung der Erfindung weist das Verfahren ferner folgende Schritte auf: Abführen von Brüden aus dem dritten Bereich durch einen Brüdenabzug; und Abführen des Reaktionsmediums aus der Entgasungskolonne mittels eines Reaktionsmediums-Rücklauf.

Gemäß einer vorteilhaften Weiterbildung dieser Ausführungsform wird der abgeführte Brüden als Heizmedium für eine nachgeschaltete Entgasungskolonne verwendet und/oder wird das Reaktionsmedium aus dem Reaktionsmedium-Rücklauf in einen Reaktionsmedium-Vorlauf einer nachgeschalteten Entgasungskolonne zugeführt.

Hierdurch können mehrere Entgasungskolonnen hintereinander geschaltet werden, so dass ein System von Entgasungskolonnen mit einer guten Leistung erhalten werden kann.

Eine besonders vorteilhafte Ausgestaltung der vorliegenden Erfindung sieht vor, dass mindestens eine erste Stufe und eine zweite Stufe von Entgasungskolonnen angeordnet ist, wobei jede der Stufen mindestens eine Entgasungskolonne aufweist, wobei der zweite Bereich der mindestens einen Entgasungskolonne der ersten Stufe mittels eines Heizmediums geheizt wird, wobei der zweite Bereich der mindestens einen Entgasungskolonne der zweiten Stufe mittels Brüdens aus der mindestens einen Entgasungskolonne der ersten Stufe geheizt wird.

Jede Stufe kann eine Vielzahl von Entgasungskolonnen aufweisen.

Gemäß einer vorteilhaften Weiterbildung wird der Druck in dem zweiten Bereich der Entgasungskolonne größer vorgegeben als der Druck in dem ersten Bereich und dem dritten Bereich der Entgasungskolonne.

Je nach gewünschter Siedetemperatur kann die Entgasungskolonne im Vakuum, bei Umgebungsdruck oder im Überdruck betrieben werden. Dabei kann durch Einstellen der Drücke die Siedetemperatur des Reaktionsmediums im ersten und dritten Bereich bzw. auch die Kondensationstemperatur des Heizmediums im zweiten Bereich eingestellt werden.

Wird der Druck in dem zweiten Bereich der Entgasungskolonne größer vorgegeben als der Druck in dem ersten Bereich und dem dritten Bereich der Entgasungskolonne, kann das Reaktionsmedium in dem ersten und dritten Bereich einen niedrigeren Siedepunkt als das Heizmedium, beispielsweise Brüden, in dem zweiten Bereich haben. Durch die unterschiedlichen Siedetemperaturen von Brüden und Reaktionsmedium entsteht ein Wärmegefälle hin zu dem Reaktionsmedium. Beim Wärmeübertragen kondensiert der Brüden, wobei das Reaktionsmedium wiederum zu Brüden verdampft, welcher in der nächsten Stufe als Heizmedium verwendet werden kann.

Durch mehrstufige System mit Entgasungskolonnen in mehreren Stufen kann die der ersten Stufe zugeführte Energie durch Rückkondensation der Brüden mehrfach genutzt werden, indem der Druck von Stufe zu Stufe verringert wird.

Die Entgasungskolonne, das System zum Entgasen und/oder Eindicken und das Verfahren zum Entgasen und/oder Eindicken sind besonders dazu geeignet, ein Reaktionsmedium einzudicken, zu entgasen, zu destillieren, zu konzentrieren oder zu verdampfen.

### KURZE BESCHREIBUNG DER ZEICHNUNGEN

Weitere Merkmale, Vorteile und Ausführungsformen der Erfindung ergeben sich aus der nachfolgenden Beschreibung von Ausführungsformen der Entgasungskolonne, des System und des Verfahrens und anhand der Figuren. Es zeigen:
- Fig. 1: einen Längsschnitt einer erfindungsgemäßen Entgasungskolonne;
- Fig. 2: eine perspektivische Ansicht der erfindungsgemäßen Entgasungskolonne aus Fig. 1 im Schnitt;
- Fig. 3: ein System zum Entgasen und/oder Eindicken, das im parallelen Betrieb betreibbar ist;
- Fig. 4: ein System zum Entgasen und/oder Eindicken, das im seriellen Betrieb betreibbar ist; und
- Fig. 5: ein System zum Entgasen und/oder Eindicken, das im zirkularen Betrieb betreibbar ist.

### AUSFÜHRUNGSFORMEN DER ERFINDUNG

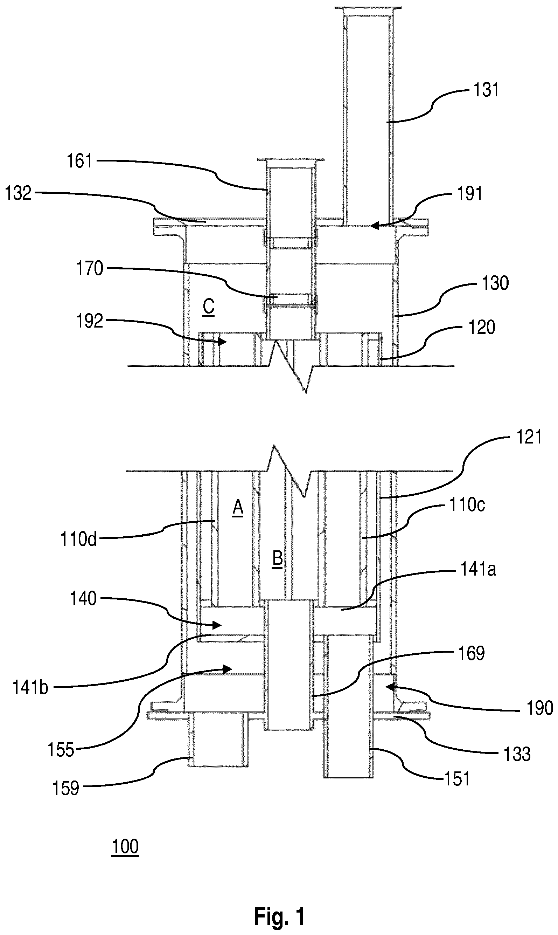

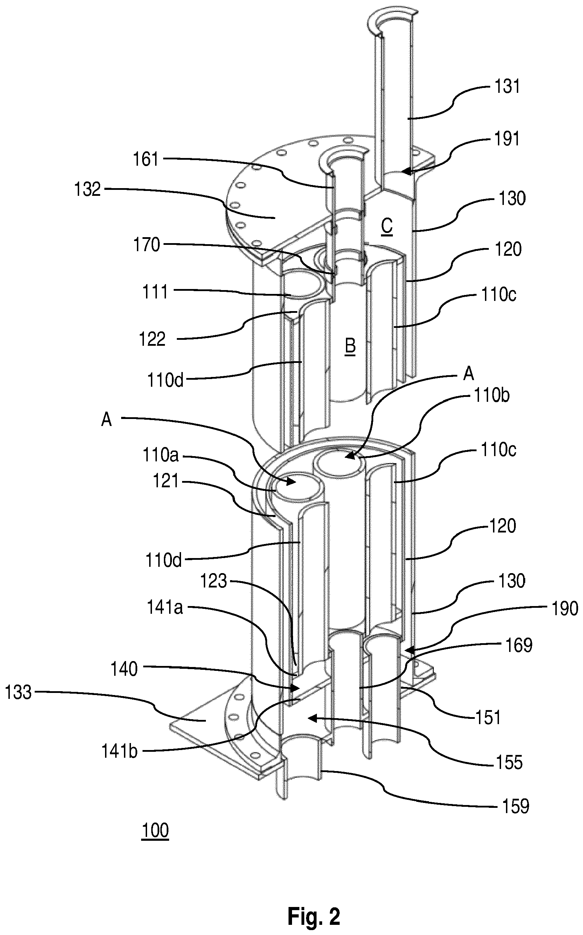

Fig. 1 zeigt einen Längsschnitt und Fig. 2 eine perspektivische Ansicht der erfindungsgemäßen Entgasungskolonne 100. Die Entgasungskolonne 100 ist durch das Darstellen einer Bruchkante in den beiden Figs. verkürzt dargestellt.

Die Entgasungskolonne 100 weist ein mittleres Rohr 120 und ein äußeres Rohr 130 auf. Das äußere Rohr 130 bildet das Außengehäuse der Entgasungskolonne 100 aus und nimmt das mittlere Rohr 120 auf. Das äußere Rohr 130 ist mit einer unteren Platte 133 und einer oberen Platte 132 verbunden und durch diese geschlossen.

Innerhalb des mittleren Rohrs 120 ist eine Vielzahl von inneren Rohren 110a, 110b, 110c und 110d angeordnet. Der Raum innerhalb der inneren Rohre 110a, 110b, 110c und 110d ist ein erster Bereich A. Der Raum zwischen den inneren Rohren 110a, 110b, 110c und 110d und dem mittleren Rohr 120 ist ein zweiter Bereich B. Dabei wird der zweite Bereich B oben von einer oberen Platte 122 und unten von einer unteren Platte 123 begrenzt. Der Raum zwischen dem äußeren Rohr 130 und dem mittleren Rohr 120 ist ein dritter Bereich C. Dabei wird der dritte Bereich C oben von der oberen Platte 132 und unten von der unteren Platte 133 begrenzt.

In einem unteren Bereich der Entgasungskolonne 100 ist ein Reaktionsmedium-Vorlauf 151 angeordnet, durch den das Reaktionsmedium in die Entgasungskolonne 100 hinein strömen kann. Insbesondere strömt das Reaktionsmedium durch den Reaktionsmedium-Vorlauf 151 in einen Verteilerraum 140. Der Verteilerraum 140 ist aus einer oberen Verteilerplatte 141a, einer untere Verteilerplatte 141b und einem unteren Wandbereich des mittleren Rohrs 120 ausgebildet. Die obere Verteilerplatte 141a ist gleichzeitig auch die untere Platte 123 des mittleren Rohrs 120.

Von dem Verteilerraum 140 geht die Vielzahl der inneren Rohre 110a, 110b, 110c und 110d ab, so dass das Reaktionsmedium auf die inneren Rohre 110a, 110b, 110c und 110d aufgeteilt werden kann. Durch die inneren Rohre 110a, 110b, 110c und 110d strömt das Reaktionsmedium nach oben.

In einem oberen Bereich der Entgasungskolonne 100 ist ein Heizmedium-Vorlauf 161 ausgebildet. Hier ist der Heizmedium-Vorlauf 161 koaxial zu dem mittleren Rohr 120 und dem äußeren Rohr 130 ausgebildet. Der Heizmedium-Vorlauf 161 ist über eine Längenkompensations-Einrichtung 170 fluidisch mit dem zweiten Bereich B verbunden. Insbesondere ist der Heizmedium-Vorlauf 161 mit der oberen Platte 122 verbunden. Daher kann durch den Heizmedium-Vorlauf 161 Heizmedium in den zweiten Bereich B strömen, der die inneren Rohre 110a, 110b, 110c und 110d umgibt.

So kann das Reaktionsmedium, das durch die inneren Rohre 110a, 110b, 110c und 110d nach oben befördert wird, durch das Heizmedium im zweiten Bereich B erhitzt werden. Das Heizmedium kann mittels eines Heizmedium-Rücklaufs 169, der an einem unteren Bereich der Entgasungskolonne 100 angeordnet ist, aus der Entgasungskolonne 100 geleitet werden.

Durch die inneren Rohre 110a, 110b, 110c und 110d strömt das Reaktionsmedium nach oben, wobei es kontinuierlich erhitzt wird. An einem oberen Bereich weisen die inneren Rohre 110a, 110b, 110c und 110d einen Fluidüberlauf 111 auf, an dem das Reaktionsmedium überläuft. Das Reaktionsmedium läuft zu einem Rand der oberen Platte 122 und dann an einer Außenfläche 121 des mittleren Rohrs 120 wieder nach unten. Das mittlere Rohr 120 und der Reaktionsmedium-Strom sind so eingestellt, dass das Reaktionsmedium in einer dünnen Schicht an der Außenfläche 121 herunterläuft. Beim Herunterlaufen wird das Reaktionsmedium weiter durch das Heizmedium erhitzt und verdampft.

Das teilweise entgaste Reaktionsmedium wird nach dem Herunterlaufen in einem unteren Bereich der Entgasungskolonne 100 in einem Reaktionsmedium-Speicher 155 gesammelt und kann von dort mittels eines Reaktionsmedium-Rücklaufs 159 aus der Entgasungskolonne 100 geleitet werden. Das Reaktionsmedium kann im Reaktionsmedium-Speicher 155 mittels einer Heizeinrichtung, beispielsweise ein nicht detailliert dargestelltes Heizrohr 190 erhitzt bzw. warmgehalten werden.

Der von dem Reaktionsmedium verdampfende Brüden kann mittels eines Brüdenabzugs 131 abgezogen werden. Der Brüdenabzug 131 ist an der oberen Platte 132 des äußeren Rohrs 130 angeordnet. An dem Brüdenabzug 131 kann ein nicht detailliert dargestellter Schaumzerstörer 191 angeordnet sein.

Die Bezugsziffer 192 deutet eine Einrichtung zum Vergrößern der Reaktionsfläche, zum Verlangsamen der Strömungsgeschwindigkeit und/oder zum Verwirbeln des Reaktionsmediums an, die in der Entgasungskolonne ausgebildet ist. Die Einrichtung 192 ist allerdings nicht weiter detailliert dargestellt. Die Einrichtung 192 ist hier nur beispielsweise im ersten Bereich A dargestellt. Auch im zweiten Bereich B und dritten Bereich D können derartige Einrichtungen 192 angeordnet sein.

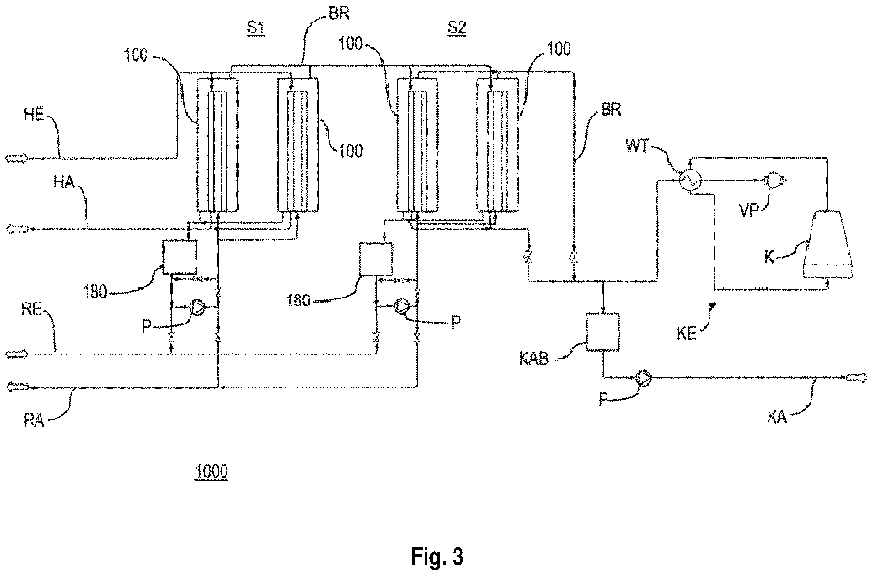

Die Fig.3 bis 5 zeigen schematische Ablaufdiagramme von Systemen 1000 zum Entgasen und/oder Eindicken. Die Ventile müssen nicht zwangsläufig in der dargestellten Anordnung ausgebildet sein. Allerdings sind die Ventile vorzugsweise in der dargestellten Anordnung ausgebildet. Zusätzlich können weitere Ventile ausgebildet sein.

Fig. 3 zeigt ein System 1000 zum Entgasen und/oder Eindicken, das im parallelen Betrieb betreibbar ist. Hier zirkuliert das Reaktionsmedium innerhalb einer Stufe S1 oder S2, bis es den gewünschten Entgasungs- bzw. Eindickungszustand erreicht.

Das Reaktionsmedium zirkuliert immer nur innerhalb einer Stufe S1 oder S2. Dabei wird die Zirkulation mittels Pumpen P ermöglicht. Hier weist das System 1000 eine erste Stufe S1 und eine zweite Stufe S2 auf, die jeweils zwei Entgasungskolonnen 100 aufweisen. Jede der beiden Stufen S1, S2 weist einen Reaktionsmedium-Einlass RE und einen Reaktionsmedium-Auslass RA auf. Über den Reaktionsmediums-Einlass RE wird frisches Reaktionsmedium in die Entgasungskolonnen 100 gepumpt.

Jede Stufe weist einen Vorratstank 180 auf, der dazu dient, sicherzustellen, dass genug Reaktionsmedium in jeder Stufe S1, S2 zirkulieren kann. Die erste Stufe S1 wird mit einem Heizmedium erhitzt. Das Heizmedium ist über einen Heizmedium-Einlass HE in die erste Stufe S1 einbringbar und durch einen Heizmedium-Auslass HA aus dieser auslassbar. Somit wird das Reaktionsmedium in der ersten Stufe S1 nicht mittels Brüdens sondern eines anderen, vorzugsweise flüssigen, Heizmediums erhitzt. Der Druck des Heizmediums ist so einstellbar, dass die gewünschte Siedetemperatur erreicht wird.

Aus den Entgasungskolonnen 100 der ersten Stufe S1 wird Brüden BR abgezogen, der die Entgasungskolonnen 100 der zweite Stufe S2 bzw. das Reaktionsmedium darin erhitzt. Dabei wird der Druck in der zweiten Stufe S2 gegenüber der ersten Stufe S1 abgesenkt, so dass eine niedrigere Siedetemperatur in der zweiten Stufe S2 eingestellt werden kann. Ist eine gewünschte Entgasung bzw. Eindickung erreicht, wird das Reaktionsmedium aus den Stufen S1 und S2 gepumpt und die Stufen S1 und S2 werden mit neuem Reaktionsmedium gefüllt. Das entstehende Kondensat wird in einem Kondensat-Auffangbehälter KAB zwischengespeichert. Von dort aus kann es über eine Pumpe P weiter zu einem Kondensat-Auslass KA befördert werden. Der Brüden BR der letzten Stufe, hier der zweiten Stufe S2, muss für eine Kondensation gekühlt werden. Hierzu ist eine Kühleinrichtung KE angeordnet. Die Kühleinrichtung KE kann beispielsweise einen Wärmetauscher WT, eine Vakuumpumpe VP und eine Kühlung K aufweisen.

Auch wenn in Fig. 3 nur zwei Stufen S1 und S2 mit Entgasungskolonnen 100 dargestellt sind, können mehr Stufen ausgebildet werden. Auch kann jede Stufe mehr als zwei Entgasungskolonnen 100 aufweisen.

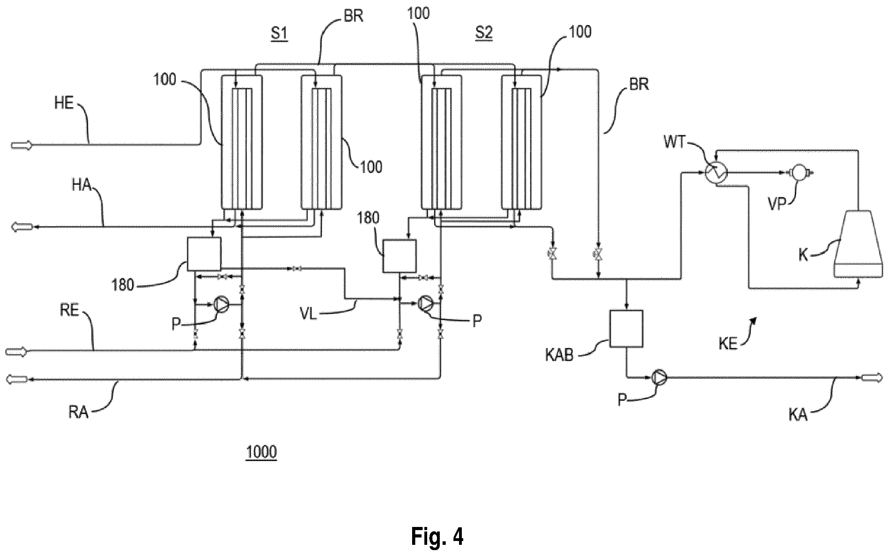

Fig. 4 zeigt ein weiteres System 1000 zum Entgasen und/oder Eindicken, das im seriellen Betrieb und einem Mischbetrieb betreibbar ist.

Der Aufbau des in Fig. 4 gezeigten Systems 1000 ist auf den ersten Blick ähnlich zu dem in Fig. 3 gezeigten System 1000. Auch hier sind zwei Entgasungskolonnen 100 in zwei Stufen S1 und S2 angeordnet, wobei hinter der letzten Stufe, hier der Stufe S2, auch ein Kondensat-Auffangbehälter KAB und eine Kühleinrichtung KE angeordnet sind. Auch wird die zweite Stufe S2 wiederum mittels Brüdens aus der ersten Stufe S1 erhitzt. Auch hier können mehr als zwei Stufen ausgebildet sein. Auf die identischen Aspekte wird im Folgenden dennoch nicht weiter eingegangen; vielmehr werden die Unterschiede genauer beschrieben.

Bei dem in Fig. 4 gezeigten System 1000 liegt, und zwar im Unterschied zu der in Fig. 3 gezeigten parallelen Konfiguration, eine Verbindung der einzelnen Stufen vor. Insbesondere ist eine Verbindungsleitung VL angeordnet, mittels derer Reaktionsmedium aus der ersten Stufe S1 in die zweite Stufe S2 gepumpt werden kann.

Hierdurch ist es möglich, der ersten Stufe S1 immer wieder frisches d.h. noch nicht entgastes Reaktionsmedium zuzuführen. Die entsprechende Menge an Reaktionsmedium wird dann in die nächste Stufe, also die Stufe S2, weitergepumpt. Das Zuführen von frischem Reaktionsmedium und das Weitergeben des Reaktionsmediums aus der ersten Stufe S1 an die zweite Stufe S2 erfolgt kontinuierlich. So kann dieser Aufbau direkt für eine lineare Betriebsweise verwendet werden, bei der das Reaktionsmedium nicht innerhalb einer Stufe zirkuliert, sondern direkt weiter gepumpt wird.

Da beim Weiterpumpen immer bereits fortgeschritten entgastes Reaktionsmedium der n-ten Stufe mit dem weniger entgasten Medium der n-1-ten Stufe vermischt wird, ist es sinnvoll, die letzte Stufe im Chargenbetrieb zu betreiben. So ist dort eine vollständige Entgasung möglich.

In dem in Fig. 4 gezeigten Beispiel sind nur zwei Stufen S1 und S2 ausgebildet. Somit wäre es hier denkbar, dass die erste Stufe S1 kontinuierlich Reaktionsmedium verarbeitet, so dass sich der Vorratstank 180 der ersten Stufe S1 füllt. Wenn das Reaktionsmedium in der zweiten im Chargenbetrieb arbeitenden Stufe S2 fertig entgast ist, kann die zweite Stufe S2 entleert werden. Dann kann von der ersten Stufe S1 neues Reaktionsmedium in die zweite Stufe S2 gepumpt werden und der Vorgang beginnt erneut. Dabei liegt dann also eine Mischkonfiguration zwischen Chargenbetrieb und seriellem Betrieb vor.

Der Vorteil der seriellen Konfiguration liegt darin, dass die Entgasungskolonnen 100 im gleichmäßigen kontinuierlichen Betrieb laufen können.

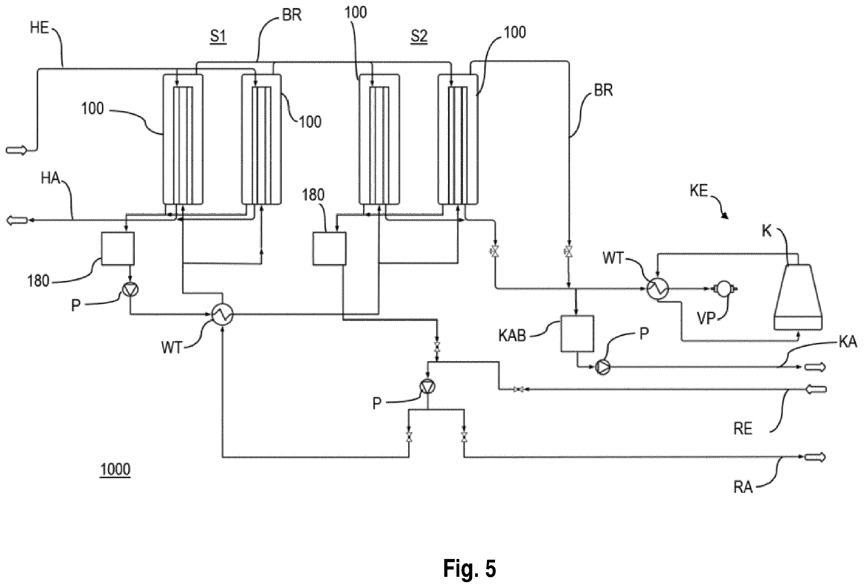

Wenn das am Ende bei der zweiten Stufe S2 ausgeschleuste Reaktionsmedium wieder in die erste Stufe S1 eingespeist wird, kann eine zirkulare Konfiguration erhalten werden. Hier ist es jedoch sinnvoll, wenn das Reaktionsmedium vor dem Rücklauf, wie in Fig. 5 gezeigt, vorgeheizt wird.

Fig. 5 zeigt ein System 1000 zum Entgasen und/oder Eindicken, das im zirkularen Betrieb betreibbar ist.

Auch bei dem in Fig. 5 gezeigten System 1000 sind wiederum zwei Entgasungskolonnen 100 in zwei Stufen S1 und S2 angeordnet. Dabei sind ebenfalls hinter der letzten Stufe ein Kondensat-Auffangbehälter KAB und eine Kühleinrichtung KE angeordnet. Auch wird die zweite Stufe S2 wiederum mittels Brüdens aus der ersten Stufe S1 erhitzt. Ferner können auch hier mehr als zwei Stufen S2 ausgebildet sein.

Die Pumpe P nahe dem Reaktionsmedium-Einlass RE führt der erste Stufe S1 Reaktionsmedium zu. Dabei durchläuft das Reaktionsmedium auf dem Weg in die erste Stufe S1 die Wärmetauscher WT aller anderen Stufen, hier nur der Stufe S2. Anstelle des Wärmeaustauschers WT kann auch eine Entgasungskolonne 100 zum Vorheizen des Reaktionsmediums verwendet werden, die mittels Brüdens aus einer der Stufen erhitzt wird.

In der ersten Stufe S1 durchläuft das Medium eine erste Entgasungskolonne 100. Der Druck in der ersten Stufe S1 wird so eingestellt, dass das Reaktionsmedium bei der gewünschten Siedetemperatur verdampft. Das zurücklaufende Reaktionsmedium aus der ersten Stufe S1 wird mittels einer Pumpe P über den Wärmetauscher WT zwischen der ersten S1 und der zweiten Stufe S2 in die zweite Stufe S2 gepumpt.

Im Wärmetauscher WT wird hierbei das Reaktionsmedium aus der ersten Stufe S1 gekühlt, während das zu der ersten Stufe S1 laufende Reaktionsmedium geheizt wird. Das Erhitzen und Kühlen dient dazu, die Medientemperaturen an die Siedetemperatur der einzelnen Stufen anzupassen und sorgt für eine Energierückgewinnung.

In der zweiten Stufe S2 durchläuft das Reaktionsmedium wieder eine Entgasungskolonne 100. Der Druck in der zweiten Stufe S2 wird gegenüber der ersten Stufe S1 und somit gegenüber dem Brüden im zweiten Bereich B der Entgasungskolonne 100 der zweiten Stufe S2 gesenkt, um einen niedrigeren Siedepunkt des Reaktionsmediums zu erhalten. Das Reaktionsmedium wird dann wieder über den Wärmetauscher WT in die erste Stufe S1 oder, wenn es fertig entgast ist, aus dem Kreislauf gepumpt.

Es ist auch möglich, das System 1000 mit lediglich einer Pumpe P zu betreiben. Dabei entnimmt die Pumpe P Reaktionsmedium aus dem Vorratstank 180 der jeweiligen Stufe, während sie gleichzeitig jede Entgasungskolonne 100 jeder Stufe mit Reaktionsmedium versorgt.

Es versteht sich, dass bei der vorliegenden Erfindung ein Zusammenhang zwischen einerseits Merkmalen besteht, die im Zusammenhang mit Verfahrensschritten beschrieben wurden, sowie andererseits Merkmalen, die im Zusammenhang mit entsprechenden Vorrichtungen beschrieben wurden. Somit sind beschriebene Verfahrensmerkmale auch als zur Erfindung gehörige Vorrichtungsmerkmale - und umgekehrt - anzusehen, selbst wenn dies nicht explizit erwähnt wurde.

Es ist festzuhalten, dass die unter Bezug auf einzelne Ausführungsformen bzw. Varianten beschriebenen Merkmale der Erfindung, wie beispielsweise Art und Ausgestaltung der einzelnen Komponenten sowie deren genaue Dimensionierung und räumliche Anordnung, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

### BEZUGSZEICHENLISTE

- 1000: System zum Entgasen
- 100: Entgasungskolonne
- 110, 110a 110 b, 110c, 110d: inneres Rohr
- 111: Fluidüberlauf
- 120: mittleres Rohr
- 121: Grenzfläche bzw. Außenfläche (des mittleren Rohrs)
- 122: obere Platte (des mittleren Rohrs)
- 123: untere Platte (des mittleren Rohrs)
- 130: äußeres Rohr
- 131: Brüdenabzug
- 132: obere Platte (des äußeren Rohrs)
- 133: untere Platte (des äußeren Rohrs)
- 140: Verteilerraum
- 141a: obere Verteilerplatte
- 141b: untere Verteilerplatte
- 151: Reaktionsmedium-Vorlauf
- 155: Reaktionsmedium-Speicher
- 159: Reaktionsmedium-Rücklauf
- 161: Heizmedium-Vorlauf
- 169: Heizmedium-Rücklauf
- 170: Längenkompensations-Einrichtung
- 180: Vorratstank
- 190: Heizrohr
- 191: Schaumzerstörer
- 192: Einrichtung zum Vergrößern der Reaktionsfläche, zum Verlangsamen der Strömungsgeschwindigkeit und/oder zum Verwirbeln des Reaktionsmediums

- A: erster Bereich
- B: zweiter Bereich
- C: dritter Bereich

- BR: Brüden
- HA: Heizmedium-Auslass
- HE: Heizmedium-Einlass
- K: Kühlung
- KA: Kondensat-Auslass
- KAB: Kondensat-Auffangbehälter
- KE: Kühleinrichtung
- P: Pumpe
- RA: Reaktionsmedium-Auslass
- RE: Reaktionsmedium-Einlass
- S1: Stufe 1
- S2: Stufe 2
- VL: Verbindungsleitung
- VP: Vakuumpumpe
- WT: Wärmetauscher

## Patentansprüche

1. Entgasungskolonne (100) zum Entgasen und/oder Eindicken eines Reaktionsmediums, wobei die Entgasungskolonne (100) Folgendes aufweist:
- mindestens ein inneres Rohr (110), das dazu ausgebildet ist, von einem Reaktionsmedium durchströmt zu werden;
- mindestens ein mittleres Rohr (120) zum Erhitzen des Reaktionsmediums, insbesondere mittels eines Heizmediums, wobei das innere Rohr (110) zumindest bereichsweise innerhalb des mittleren Rohrs (120) ausgebildet ist; und
- ein äußeres Rohr (130) als Reaktionsraum für das Reaktionsmedium, wobei das mittlere Rohr (120) innerhalb des äußeren Rohrs (130) ausgebildet ist,
wobei das mindestens eine innere Rohr (110) einen Fluidüberlauf (111) aufweist, über den das Reaktionsmedium nach Ausströmen aus dem mindestens einen inneren Rohr (110) zum Strömen entlang einer Außenfläche (121) des mittleren Rohres (120) nach unten führbar ist,
wobei ein erster Bereich (A) in dem Innenbereich des mindestens einen inneren Rohrs (110) ausgebildet ist, wobei ein zweiter Bereich (B) zwischen dem inneren Rohr (110) und dem mittleren Rohr (120) ausgebildet ist, und wobei ein dritter Bereich (C) zwischen dem äußeren Rohr (130) und dem mittleren Rohr (120) ausgebildet ist, und
wobei der zweite Bereich (B) dazu ausgebildet ist, das Reaktionsmedium beim Durchströmen in dem inneren Rohr (110) und beim Entlangströmen an der Außenfläche (121) des mittleren Rohrs (120) zu erhitzen.

2. Entgasungskolonne (100) nach Anspruch 1, wobei die Entgasungskolonne (100) ferner Folgendes aufweist:
- einen Reaktionsmedium-Vorlauf (151) hin zu dem ersten Bereich (A) und einen Reaktionsmedium-Rücklauf (159) weg von dem dritten Bereich (C);
- einen Heizmedium-Vorlauf (161) hin zu dem zweiten Bereich (B) und einen Heizmedium-Rücklauf (169) weg von dem zweiten Bereich (B); und
- einen Brüdenabzug (131) weg von dem dritten Bereich (C).

3. Entgasungskolonne (100) nach Anspruch 2,
wobei das mindestens eine innere Rohr (110) eine Vielzahl von inneren Rohren (110a, 110b, 110c, 110d) aufweist, und
wobei zwischen dem Reaktionsmedium-Vorlauf (151) und der Vielzahl von inneren Rohren (110a, 110b, 110c, 110d) ein Verteilerraum (140) zum Verteilen des Reaktionsmediums in die inneren Rohre (110a, 110b, 110c, 110d) ausgebildet ist.

4. Entgasungskolonne (100) nach Anspruch 2 oder 3,
wobei innerhalb des äußeren Rohrs (130) vor dem Reaktionsmedium-Rücklauf (159) ein Reaktionsmedium-Speicher (155) angeordnet ist.

5. Entgasungskolonne (100) nach einem der vorherigen Ansprüche,
wobei innerhalb des ersten Bereichs (A), innerhalb des zweiten Bereichs (B) und/oder innerhalb des dritten Bereichs (C) Einrichtungen (192) zum Vergrößern der Reaktionsfläche, zum Verlangsamen der Strömungsgeschwindigkeit und/oder zum Verwirbeln des Reaktionsmediums ausgebildet sind.

6. Entgasungskolonne (100) nach einem der vorherigen Ansprüche,
wobei mindestens ein Heizrohr (190) innerhalb des ersten Bereichs (A) oder dritten Bereichs (C) angeordnet ist,
wobei das mindestens eine Heizrohr (190) mit einer externen Heizung verbunden ausgebildet ist.

7. Entgasungskolonne (100) nach einem der vorherigen Ansprüche,
wobei die Entgasungskolonne (100) einen Schaumzerstörer (191) aufweist.

8. Entgasungskolonne (100) nach einem der vorherigen Ansprüche,
wobei eine Längenkompensations-Einrichtung (170) zwischen dem mittleren (120) und/oder dem inneren Rohr (110) und dem äußeren Rohr (130) ausgebildet ist.

9. Entgasungskolonne (100) nach einem der vorherigen Ansprüche,
wobei das Reaktionsmedium Gülle ist.

10. System (1000) zum Entgasen und/oder Eindicken von Reaktionsmedium,
wobei das System (1000) eine Vielzahl von Entgasungskolonnen (100) nach einem der vorherigen Ansprüche in mehreren Stufen (S1, S2) aufweist,
wobei die Entgasungskolonnen (100) parallel, seriell oder zirkular betreibbar sind.

11. Verfahren zum Entgasen und/oder Eindicken eines Reaktionsmediums in einer Entgasungskolonne (100) mit einem ersten Bereich (A), einem zweiten Bereich (B) und einem dritten Bereich (C), wobei das Verfahren folgende Schritte aufweist:
- Strömen von Reaktionsmedium in den ersten Bereich (A);
- Strömen von Heizmedium in den zweiten Bereich (B);
- erstes Erhitzen des Reaktionsmediums innerhalb des ersten Bereichs (A) mittels des zweiten Bereichs (B), wobei das Erhitzen des Reaktionsmediums beim Durchströmen des ersten Bereichs (A) erfolgt;
wobei das Reaktionsmedium an einem Fluidüberlauf (111) zwischen dem ersten Bereich (A) und einer Grenzfläche (121) zwischen dem zweiten Bereich (B) und dem dritten Bereich (C) überläuft und entlang der Grenzfläche (121) herabläuft, wobei ein zweites Erhitzen des Reaktionsmediums an der Grenzfläche (121) des zweiten Bereichs (B) erfolgt.

12. Verfahren zum Entgasen und/oder Eindicken eines Reaktionsmediums gemäß Anspruch 11, wobei das Verfahren ferner folgende Schritte aufweist:
- Abführen von Brüden aus dem dritten Bereich (C) durch einen Brüdenabzug (131); und
- Abführen des Reaktionsmediums aus der Entgasungskolonne (100) mittels eines Reaktionsmediums-Rücklauf (159).

13. Verfahren zum Entgasen und/oder Eindicken eines Reaktionsmediums gemäß Anspruch 12,
wobei der abgeführte Brüden als Heizmedium für eine nachgeschaltete Entgasungskolonne (100) verwendet wird und/oder
wobei das Reaktionsmedium aus dem Reaktionsmedium-Rücklauf (159) in einen Reaktionsmedium-Vorlauf (151) einer nachgeschalteten Entgasungskolonne (100) zugeführt wird.

14. Verfahren zum Entgasen und/oder Eindicken eines Reaktionsmediums gemäß einem der Ansprüche 12 oder 13,
wobei mindestens eine erste Stufe (S1) und eine zweite Stufe (S2) von Entgasungskolonnen (100) angeordnet ist und wobei jede der Stufen (S1, S2) mindestens eine Entgasungskolonne (100) aufweist,
wobei der zweite Bereich (B) der mindestens einen Entgasungskolonne (100) der ersten Stufe (S1) mittels eines Heizmediums geheizt wird,
wobei der zweite Bereich (B) der mindestens einen Entgasungskolonne (100) der zweiten Stufe (S2) mittels Brüden aus der mindestens einen Entgasungskolonne (100) der ersten Stufe (S1) geheizt wird.

15. Verfahren zum Entgasen und/oder Eindicken eines Reaktionsmediums gemäß einem der Ansprüche 11 bis 14,
wobei der Druck in dem zweiten Bereich (B) der Entgasungskolonne (100) größer vorgegeben wird als der Druck in dem ersten Bereich (A) und dem dritten Bereich (C) der Entgasungskolonne (100).
